(19) Europäisches Patentamt
European Patent Office
Office européen des brevets

(11) EP 1 702 961 B1

(12) EUROPEAN PATENT SPECIFICATION

(45) Date of publication and mention of the grant of the patent:
**05.11.2008 Bulletin 2008/45**

(51) Int Cl.:
*C09D 11/00* (2006.01) *C09D 11/10* (2006.01)
*C08F 299/00* (2006.01)

(21) Application number: **06110562.3**

(22) Date of filing: **01.03.2006**

# (54) Ink-jet ink, ink-jet ink set, and ink-jet recording method

Tinte, Tintensatz und Aufnahmemethode für den Tintenstrahldruck

Encre, ensemble d'encres et procédé d'enregistrement pour jet d'encre

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.03.2005 JP 2005070714**
**26.08.2005 JP 2005245731**

(43) Date of publication of application:
**20.09.2006 Bulletin 2006/38**

(73) Proprietor: **KONICA MINOLTA HOLDINGS, INC.**
**Tokyo 100-0005 (JP)**

(72) Inventors:
- **Furuno, Kumiko**
  **c/o Konica Minolta IJ Technol., Inc**
  **Tokyo**
  **Tokyo 191-8511 (JP)**
- **Nakamura, Masaki**
  **Konica Minolta IJ Technol., Inc**
  **Tokyo**
  **Tokyo 191-8511 (JP)**
- **Yamauchi, Masayoshi**
  **Konica Minolta IJ Technol.,Inc**
  **Tokyo**
  **Tokyo 191-8511 (JP)**
- **Tsubaki,Yoshinori**
  **Konica Minolta IJ Technol., Inc**
  **Tokyo**
  **Tokyo 191-8511 (JP)**
- **Ohkubo, Kenichi**
  **c/o Konica Minolta Technology Cent**
  **Tokyo**
  **Tokyo 191-8511 (JP)**

(74) Representative: **Gille Hrabal Struck Neidlein Prop Roos**
**Patentanwälte**
**Brucknerstrasse 20**
**40593 Düsseldorf (DE)**

(56) References cited:
**EP-A- 0 997 508**
**EP-A- 1 616 899**
**WO-A-20/04044024**
**WO-A-20/04052947**
**WO-A-20/05012448**
**US-A- 5 994 033**
**US-A1- 2003 031 843**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This application is based on Japanese Patent Application Nos. 2005-070714 filed on March 14, 2005 and 2005-245731 filed on August 26, 2005 in Japanese Patent Office, the entire content of which is hereby incorporated by reference.

## TECHNICAL FIELD

The present invention relates to a novel ink-jet ink, an ink-jet ink set, and an ink-jet recording method using the same.

## BACKGROUND

An ink-jet recording method enables highly precise image recording with a relatively simple apparatus and has been rapidly prevailing in various fields. Further, the application purposes are various and employed is a recording medium or an ink-jet ink suitable for each purpose.

Specifically, in recent years, the rate of ink-jet recording has been markedly enhanced, and ink-jet printers, which resulted in printing performance applicable to shortrun printing, have been developed.

However, in ink-jet printers, in order to fully utilize their capability, required are sheets only for ink-jet printing, which exhibit absorbability of ink-jet ink.

When recording is conducted onto low ink absorptive media such as art paper or coated paper, or non-ink absorptive media such as plastic film, problems such as bleeding occur in which inks, which differ in hue, are mixed on recording media, resulting in color mixing. In typical ink-jet recording systems, the above problem has been a drawback in terms of providing diversification of recording media.

In order to overcome the above drawback, disclosed is the ink-jet recording ink which is cured via exposure to ultraviolet radiation (refer to Patent Document 1). Further, proposed is a so-called non-water based ink which incorporates pigments as a colorant, and tri- or higher functional polyacrylates, as well as incorporates alcohol as a major solvent (refer to Patent Document 2). Still further proposed is a water based actinic radiation curing type ink-jet recording ink composition which incorporates polyurethane compounds having a group containing an actinic radiation curable unsaturated double bond, basic compounds, colorants, water-soluble organic solvents, and water (refer to Patent Document 3). Yet still further proposed is a water based ink-jet ink which incorporates self-dispersing type pigments in which one or more hydrophilic groups bond to the surface of pigment particles, ultraviolet radiation curable type monomers composed of vinyl compounds, photopolymerization initiators, and water (refer to Patent Document 4). Employing these methods, it is proposed that it is possible to achieve desired recording onto non-absorptive recording media.

However, when ink-jet ink incorporates ultraviolet radiation curable type polymers in a high enough amount to fix the formed image, the solid content in the ink-jet ink tends to become excessively high, whereby problems occur with a low feeling of quality of printed matter, such as raised dots. Further, the exposure energy of ultraviolet radiation, which is required to cure dots to allow them to fix onto a recording medium, increases, whereby problems occur in which power consumption of the exposure apparatus increases.

To overcome the above drawbacks, proposed is a method in which, in addition to photocurable type resins, minute non-photocurable type resinous particles are incorporated into an ink-jet ink (refer, for example, to Patent Document 5). According to the method disclosed therein, it is possible to assume that ejection is stabilized, and by adding resin microparticles to the ink-jet ink incorporating photocurable type polymers, fixability is improved.

However, by incorporating minute non-photocurable type resinous particles into ink, in addition to the photocurable type resins, it was found that a new problem resulted in which in ink droplets impinged on a recording medium, the curing rate decreased due to the shielding effect to exposed ultraviolet radiation by the presence of minute non-photocurable type resinous particles.

(Patent Document 1) Japanese Patent Publication Open to Public Inspection (hereinafter referred to as JP-A) No. 9-165541

(Patent Document 1) U.S. Patent No. 4,228,438
(Patent Document 2) JP-A No. 5-64667
(Patent Document 3) JP-A No. 2002-80767
(Patent Document 4) JP-A No. 2002-275404
(Patent Document 5) JP-A No. 2001-81365

## SUMMARY

In view of the foregoing, the present invention was achieved. An object of the present invention is to provide an ink-jet ink which is capable of minimizing feathering, bleeding and beading by employing actinic radiation crosslinking polymers, which exhibits a sufficient curing rate even though resin microparticles are incorporated in the ink-jet ink, which exhibits excellent ejection stability, and results in sufficient fixability and waterfastness, an inkjet ink set, and an ink-jet recording method using the same.

An object of the present invention can be achieved by the following embodiments.

(1) An ink-jet ink comprising a pigment, resin microparticles and a polymer
wherein the polymer has a hydrophilic main chain and a plurality of side chains and the polymer is capable of undergoing crosslinking between the side chains by irradiation with actinic radiation.
(2) The ink-jet ink of the above-described item 1,
wherein the resin microparticles have a glass transition point (Tg) in the range of -30 to 150 °C.
(3) The ink-jet ink of the above-described items 1 or 2,
wherein the resin microparticles have an average particle diameter of 10 to 200 nm.
(4) The ink-jet ink of any one of the above-described items 1 to 3,
wherein a content of the resin microparticles is in an amount of 10 to 200 weight% based on a weight of the pigemnt in the ink-jet ink.
(5) The ink-jet ink of any one of the above-described items 1 to 4,
wherein the resin microparticles are made of polyurethane.
(6) The ink-jet ink of any one of the above-described items 1 to 5,
wherein the hydrophilic main chain of the polymer is a saponified polyvinyl acetate having a saponification ratio of 77 to 99% and the polymer has a degree of 200 to 4000.
(7) The ink-jet ink of any one of the above-described items 1 to 6,
wherein the polymer has a modification ratio of the side chain to the main hydrophilic chain is 0.8 to 4 mole%.
(8) The ink-jet ink of any one of the above-described items 1 to 7, further comprising a water-soluble photopolymerization initiator.
(9) An ink-jet ink set comprising two or more ink-jet inks,
wherein at least one of the ink-jet inks is the ink-jet ink of any one of the above-described items 1 to 8.
(10) A method of forming an ink-jet image comprising the steps of:

jetting droplets of the ink-jet ink of any one of the above-described items 1 to 8 through an ink-jet head onto an recording material;
irradiating the jetted droplets on the recording material with ultraviolet radiation; and
drying the irradiated droplets on the recording material.

(11) A method of forming an ink-jet image comprising the steps of:

jetting droplets of the ink-jet ink set of the above-described item 9 through an ink-jet head onto an recording material;
irradiating the jetted droplets on the recording material with ultraviolet radiation; and
drying the irradiated droplets on the recording material.

(12) The method of forming an ink-jet image of the above-described items 10 or 11,
wherein the recording material is low absorptive support or a non-absorptive support.
(13) The method of forming an ink-jet image of the above-described items 10 or 11,

wherein the recording material is a plain paper.

By the present invention, it was possible to provide an ink-jet ink, an inkjet ink set and an ink-jet recording method using the same. The ink-jet ink is characterized in having properties of minimizing feathering, bleeding and beading by employing actinic radiation crosslinking polymers, which exhibits a sufficient curing rate even though resin microparticles are incorporated in the ink-jet ink, which exhibits excellent ejection stability, and results in sufficient fixability and water-fastness.

## DESCRIPTION OH THE PREFERRED EMBODIMENTS

The preferred embodiments to practice the present invention will now be detailed.

The present invention relates to an ink-jet ink characterized in incorporating at least a pigment, a polymer compound, and resin microparticles, wherein the aforesaid polymer compound has a plurality of side chains on the main hydrophilic chain, and when exposed to actinic radiation, is capable of undergoing crosslinking between the side chains.

In the ink-jet ink described in Patent Document 5, in which conventional photo-curable resins and resin microparticles coexist, it was not possible to result in sufficient curing speed due to the shielding effect of resin microparticles to ultraviolet radiation. The inventors of the present invention conducted investigations and overcame the above drawback of ultraviolet radiation curable type ink by employing, instead of conventional photo-curable resins, polymer compounds which have a plurality of side chains on the main hydrophilic chain and when exposed to actinic radiation such as ultraviolet radiation, are capable of undergoing crosslinking between the side chains. Namely, by employing high speed curing polymer compounds according to the present invention, which have a plurality of side chains on the main hydrophilic chain and when exposed to actinic radiation, are capable of undergoing crosslinking between the side chains, together with resin microparticles, it was possible to simultaneously result in desired bleeding and feathering resistance, as well as sufficient fixability and waterfastness.

The present invention will now be detailed.

(Actinic Radiation Crosslinking Polymers)

The ink-jet ink (hereinafter sometimes referred to simply as the ink) of the present invention is characterized in incorporating, as polymer compounds, those (hereinafter occasionally referred to as actinic radiation crosslinking polymers) which have a plurality of side chains on the main hydrophilic chain and when exposed to actinic radiation, are capable of undergoing crosslinking between the side chains.

Examples of the polymer compounds which have a plurality of side chains on the main hydrophilic chain and when exposed to actinic radiation, are capable of undergoing crosslinking between the side chains are as follows:

saponified polyvinyl acetate products, polyvinyl acetal, polyethylene oxide, polyalkylene oxide, polyvinylpyrrolidone, polyacrylamide, hydroxyethyl cellulose, methyl cellulose, hydroxypropyl cellulose, derivatives of the above hydrophilic resins, and copolymers thereof, or those which are prepared by modifying the above hydrophilic resins employing a modifying group of a photodimerization type, a photodecomposition type, a photopolymerization type, a photomodification type, or a photodepolymerization type.

Preferred as such side chains are those which are nonionic, anionic, or amphoteric (such as betaine compounds). Specifically, when combined with anionic pigments as a colorant, in view of retention properties of the ink, those which are nonionic or anionic are preferred, but those which are nonionic are particularly preferred.

$$\text{Formula (A)} \quad P\text{-}\{(X)_m\text{-}(B)_p\text{-}(Y)_m\}$$

P: main hydrophilic chain
Formula in parentheses { } represents a side chain.
X: di- or higher valent connecting group
B: crosslinking group
Y: hydrogen atom or substituent
m: 0 or 1.
n: 0 or 1.
p: number of 1 or 2

In view of easy introduction of side chains and easier handling, preferred as such a main hydrophilic chain are those prepared by saponifying polyvinyl acetate. The saponification ratio is preferably 77 - 99 percent, while the degree of polymerization is preferably 200 - 4,000, but is more preferably 200 - 2,000 in view of easier handling. When the degree of polymerization is 200 - 500, preferable effects of the present invention are exhibited. When the degree of polymerization is at least 200, an appropriate increase in viscosity due to crosslinking is noted, resulting in sufficient bleeding and feathering resistance, while when it is at most 4,000, ejection properties at nozzles after temporary termination, so-called intermittent ejection properties remain acceptable.

The modification ratio (or conversion ratio) of the side chain to the main hydrophilic chain is preferably 0.8 - 4.0 mol percent, but is more preferably 1.0 - 3.5 mol percent in view of reactivity. When it is at least 0.8 mol percent, sufficient crosslinking is achieved, while when it is at most 4.0 mol percent, the degree of crosslinking remains appropriate, resulting in a sufficiently cured layer, whereby it is possible to maintain the layer strength.

Preferred as photo-dimerization type modifying groups are those into which a diazo group, a cinnamoyl group, a stilbazolium group, or a stilquinolium group is introduced. Examples include photosensitive resins (compositions) described in JP-A No. 60-129742.

The photosensitive resins described therein are the compounds represented by following Formula (1) in which a stilbazolium group is introduced into the polyvinyl alcohol structure.

Formula (1)

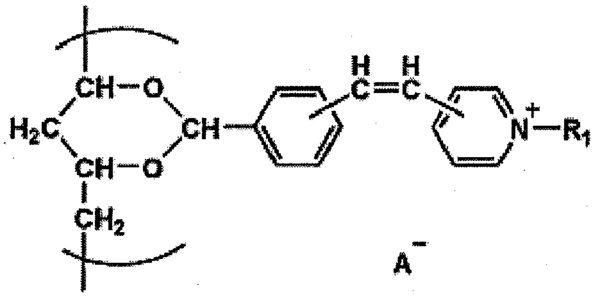

wherein $R_1$ represents an alkyl group having 1 - 4 carbon atoms, while $A^-$ represents a counter anion.

The photosensitive resins described in JP-A No. 56-67309 are resinous compositions which have, in the polyvinyl alcohol structure, either the 2-azido-5-nitrophenylcarbonyloxyethylene structure represented by following Formula (2), or the 4-azido-3-nitrophenylcarbonyloxyethylene structure represented by following Formula (3).

Formula (2)

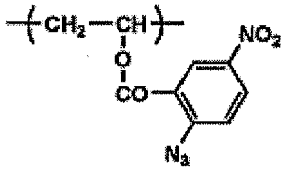

Formula (3)

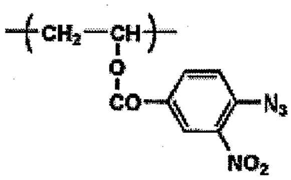

Further preferably employed are the modifying groups represented by following Formula (4).

Formula (4)

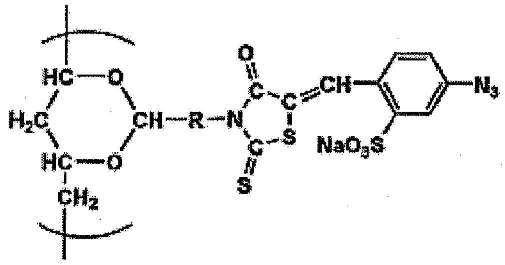

wherein R represents an alkylene group, or an aromatic ring which is preferably a benzene ring.

In view of reactivity, preferred as a photopolymerization type modifying group are resins represented by following Formula (5) described, for example, in JP-A Nos. 2000-181062 and 2004-189841.

Formula (5)

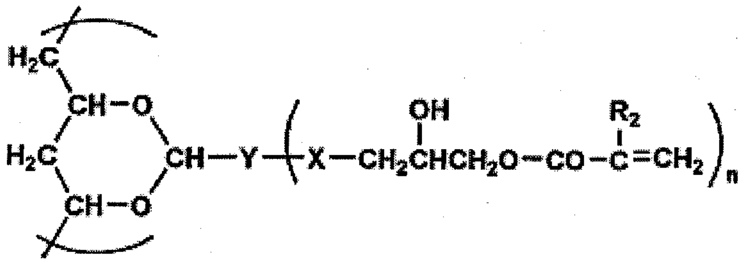

wherein $R_2$ represents Me or H; n represents 1 or 2; X represents $-(CH_2)_m-COO-$, $-CH_2-COO-$, or -O-; Y represents an aromatic ring or a single bond; and m represents an integer of 0 - 6.

Further, it is preferable to apply, to conventional water-soluble resins, the photopolymerization type modifying group represented by following Formula (6) described in JP-A No. 20004-161942.

Formula (6)

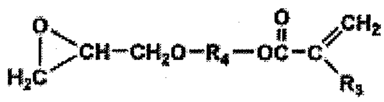

wherein $R_3$ represents Me or H, while $R_4$ represents a straight or branched alkylene group having 2 - 10 carbon atoms.

It is preferable to incorporate water-soluble photopolymerization initiators into the ink of the present invention. Such compounds may be in such a state that they are dissolved in solvents or dispersed, or chemically bonding to photosensitive resins.

Applied water-soluble photopolymerization initiators are not particularly limited, and in view of mixing properties to water based solvents and reaction efficiency, particularly preferred are 4-(2-hydroxyethoxy)phenyl-(2-hydroxy-2-propyl)ketone (HMPK), thioxanthone ammonium salts (QTX), and benzophenone ammonium salts (ABQ).

Further, in view of compatibility with actinic radiation crosslinking polymers, preferred are 4-(2-hydroxyethoxy) phenyl-(2-hydroxy-2-propyl)ketone (n = 1), HMPK) represented by following Formula (7) and ethylene oxide addition products (n = 2 - 5) thereof.

Formula (7)

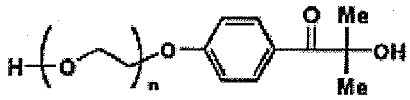

wherein n represents an integer of 1 - 5.

Further, other examples which are preferably employed include benzophenones such as benzophenone, hydroxybenzophenone, bis-N,N-dimethylaminobenzophenone, bis-N,N-diethylaminobenzophenone, or 4-methoxy-4'-dimethylaminobenzophenone; thioxanthones such as thioxanthone, 2,4-diethylthioxanthone, isopropylthioxanthone, chlorothioxanthone, or isopropoxychlorothioxanthone; anthraquinones such as ethylanthraquinone, benzanthraquinone, aminoanthraquinone, or chloroanthraquinone; acetophenones; benzoin ethers such as benzoin methyl ether; 2,4,6-trihalomethyltriazines; 1-hydoxycyclohexyl phenyl ketone, 2-(o-chlorophenyl-4,5-diphenylimidazole dimer, a 2-(o-chlorophenyl)-4,5-phenylimidazole dimer, a 2-(0-methoxyphenyl)-4,5-phenylimidzole dimer, 2-(p-methoxyphenyl)-4,5-diphenylimodazole dimer, a 2-di(p-methoxyphenyl)-5-phenylimidazole dimer, 2,4,5-triarylimidazole dimer of 2-(2,4-dimethoxyphenyl)-4,5-diphenylimidazole dimer; benzyl dimethyl ketal, 2-benzyl-2-dimethylamino-1-(4-morpholinophenyl) butane-1-one, 2-methyl-1-[4-(methylthio)phenyl]-2-morpholino-1-propane, 2-hydroxy-2-methyl-1-phenyl-propane-1-one, 1-[4-(2-hydroxyethoxy)phenyl]-2-hydroxy-2-methyl-1-propane-1-one, phenanthrenequinone, 9,10-phenanthlenequinone; benzoins such as methylbenzoin or ethylbenzoin; acridine derivatives such as 9-phenylacridine or 1,7-bis (9,9'-acridinyl)heptane; and bisacylphosphine oxide; as well as mixtures thereof. The above compounds may be employed individually or in combination.

It is possible to incorporate accelerators in addition to these water-soluble photopolymerization initiators. Listed as such examples are ethyl p-dimethylaminobenzoate, isoamyl p-dimethylaminobenzoate, ethanolamine, diethanolamine, and triethanolamine.

In these water-soluble photopolymerization initiators, it is preferable that side chains undergo graft polymerization with respect to the main hydrophilic chain.

The polymer compounds according to the present invention, which have a plurality of side chains on the main hydrophilic chain, and when exposed to actinic radiation, are capable of undergoing crosslinking between the side chains, result in marked molecular weight increasing effects per photon, compared to common ultraviolet radiation curable type resins which undergo polymerization via a chain reaction, since crosslinking occurs between the side chains of the main chain which originally exhibits a certain degree of polymerization. Consequently, a very high curing speed has been realized.

In actinic radiation curable polymers employed in the present invention, it is possible to completely control the number of crosslinking points based on the length of the main hydrophilic chain and the introduction amount of side chains, whereby it is possible to control physical properties of an ink layer in accordance with aims.

Further, conventional actinic radiation curable type ink is composed of curable components within almost all ink portions of the ink except for colorants, whereby dots are raised after curing and image quality represented by glossiness is degraded. On the other hand, the necessary amount of actinic radiation crosslinking polymers employed in the present invention is decreased, resulting in an increase in the amount of components which are removed by evaporation during drying, whereby image quality after drying is enhanced.

Ionization radiation, as described in the present invention, includes, for example, electron beams, ultraviolet radiation, $\alpha$-rays, $\beta$-rays, $\gamma$-rays, and X-rays. In view of safety of the operators, ease of handling, and wide industrial application, electron beams or ultraviolet radiation is preferred.

When electron beams are employed, the exposure amount of electron beams is preferably in the range of 0.1 - 30 Mrad. When the amount is less than 0.1 Mrad, sufficient exposure effects are not obtained, while when it exceeds 30 Mrad, substrates may be degraded. Consequently, neither case above is preferred.

When ultraviolet radiation is employed, employed as a radiation source are conventional prior-art sources such as low, medium, or high pressure mercury lamps at an operation pressure of several 100 Pa - 1 MPa, metal halide lamps, xenon lamps exhibiting an emission wavelength in the ultraviolet region, cold-cathode tubes, hot-cathode tubes, or LEDs.

(Radiation Exposure Conditions after Ink Deposition)

As actinic radiation exposure conditions, it is preferable that actinic radiation is exposed 0.001 - 1.0 second

after ink deposition on the recording medium, but is more preferably exposed 0.001 - 0.5 second. In order to form high-detail images, it is essential that the exposure is performed as soon as possible after ink deposition.

(Exposure Methods of Actinic Radiation)

The basic exposure method of actinic radiation is disclosed in JP-A No. 60-132767, according to which radiation sources are provided on both sides of a head unit, whereby the head and the radiation sources are scanned employing a shuttling system. Exposure is performed at an elapse of a specific period after ink impingement. Further, curing is completed employing another radiation source which is stationary. U.S. Patent No. 6, 145, 979 discloses exposure methods such as a method employing optical fiber, or a method in which a collimated radiation is incident to a mirror surface provided on the head unit side, whereby ultraviolet radiation is exposed to the recording section. Any of these exposure methods may be applied to the ink-jet recording method of the present invention.

Further, one of the preferred embodiments is that actinic radiation exposure is divided into two stages, on which initially, actinic radiation is exposed 0.001 - 2.0 seconds after ink deposition on the medium employing the aforesaid method, followed by an additional actinic radiation exposure. By dividing the actinic radiation exposure into two stages, it is possible to retard contraction of recording materials, which commonly occurs during ink curing.

(Resin microparticles)

The present invention is characterized in incorporating, together with minute particles, resinous polymer compounds, described above, which have a plurality of side chains on the main hydrophilic chain and when exposed to actinic radiation, are capable of undergoing crosslinking between the side chains,.

By employing actinic radiation crosslinking polymers, according to the present invention, together with resinous particles, via exposure to ultraviolet radiation after printing, ink is gelled to become insoluble, whereby bleeding and feathering are retarded, and further, in the course of penetration of penetrating components in the ink or volatilization of volatile components in the ink, the resinous particles form a layer on the resulting image to fix colorants, whereby it is possible to enhance abrasion resistance and waterfastness.

By employing ink which uses conventional ultraviolet radiation curable type resins together with resin microparticles, it has been difficult to achieve sufficient curing speed due to radiation shielding effects of the resinous particles. However, by employing active radiation crosslinking polymers, according to the present invention, which exhibit markedly a high curing speed, compared to conventional ultraviolet radiation curable type resins, excellent resistance to bleeding and feathering is achieved, and desired fixability and waterfastness are also realized.

The glass transition point (Tg) of polymer compounds which form the resin microparticles according to the present invention is preferably -30 to 150 °C, but is more preferably -10 to 120 °C. When the glass transition point (Tg) is at least -30 °C, it is possible to achieve desired ejection properties without nozzle clogging, while when it is at most 150 °C, it is possible to achieve desired waterfastness. It is possible to determine the glass transition point (Tg) based on conventional methods, utilizing discontinuous changes of the thermal expansion coefficient and specific heat during temperature change.

Resin microparticles according to the present invention are not particularly limited. Listed as preferred resins to form the above resin microparticles are polyurethane, polystyrene-acryl, polystyrene-butadiene, polystyrene-maleic acid, polyester, polyether, polycarbonate, polyamide, polyacrylonitrile, polystyrene, polybutadiene, polyacrylic acid, polyvinyl chloride, polyvinylidene chloride, polyvinyl acetate, acryl-modified silicone resins, and acryl-modified fluororesins, as well as copolymers or salts thereof. Of these, preferred is one of the copolymers selected from the group consisting of polyurethane, polystyrene-acryl, polystyrene-butadiene, and polystyrene-maleic acid.

Particularly preferred as resin microparticles according to the present invention are minute polyurethane based resinous particles which are characterized in exhibiting desired compatibility with actinic radiation crosslinking polymers according to the present invention, which remains after vaporization of volatile components in the ink. As a result, an effect is also exhibited in which glossiness of formed images is excellent. Listed as minute polyurethane based resinous particles are those which are polyester based, polyether based, polycarbonate based, and aromatic isocyanate based, of which the polyester based, polyether based, and polycarbonate based are more preferred. Specifically, it is possible to employ the SUPERFLEX series (produced by Dia-ichi Kogyo Seiyaku Co., ltd.) and the PERMARINE series (produced by Sanyo Chemical Industries, Ltd.). These may be employed individually or in combinations of at least two types.

The resin microparticles according to the present invention may be either an enforced emulsification type, in which enforced emulsification is performed employing emulsifiers, or a self-emulsification type in which dispersion is achieved by providing resins with a hydrophilic group or a hydrophilic segment. In many cases, employed as emulsifiers are surface active agents. It is also preferred to employ polymers having a hydrophilic group such as a sulfonic acid group or a carboxylic acid group (for example, polymers in which the hydrophilic group undergoes graft bonding, and polymers prepared by employing monomers having a hydrophilic portion and monomers having a hydrophobic portion).

In recent years, except for latexes into which totally uniform particles are dispersed as the polymer particle of the latexes, there exist latexes into which core/shell type polymer particles, in which the central portion and the peripheral portion differ in composition, are dispersed. It is possible to preferably employ such type of latex.

In view of retention properties, resin microparticles according the present invention are preferably anionic.

In the ink-jet ink of the present invention, the average diameter of resin microparticles is preferably 10 - 200 nm, but is more preferably 10 - 150 nm. When the average particle diameter is at least 10 nm, excellent retention properties are achieved, while when it is at most 200 nm, it is possible to result in desired glossiness. It is possible to determine the average diameter of resin microparticles, employing commercially available particle size determination instruments, based on a light scattering method, an electrophoretic method, or a laser Doppler method.

Further, in the ink-jet ink of the present invention, the content of the resin microparticles according to the present invention is preferably 5 - 200 percent by weight with respect to the pigments as a colorant, but is more preferably 10 - 200 percent by weight. When the content of the resin microparticles according to the present invention is at least 5 percent by weight with respect to the pigments, it is possible to result in sufficient abrasion resistance and waterfastness, while when it is at most 200 percent by weight, nozzle clogging prevented resulting in desired continuous ejection performance.

(Colorants)

Employed as colorants usable in the ink-jet ink according to the present invention may be various dyes and pigments known in the arts with regard to ink-jet printing, and they should be anionic from the aspect of combinations with ionic properties of side chains of actinic radiation crosslinking type resins.

(Dyes)

Dyes usable in the present invention are not particularly limited and include water-soluble dyes such as acid dyes, direct dyes, or reactive dyes, as well as disperse dyes, all of which are to be anionic dyes.

(Water-Soluble Dyes)

Listed as water-soluble anionic dyes usable in the present invention may, for example, be azo dyes, methine dyes, azomethine dyes, xanthene dyes, quinone dyes, phthalocyanine dyes, triphenylmethane dyes, and diphenylmethane dyes. Though specific compounds are listed below, the present invention is not limited thereto.

<C.I. Acid yellow>
1,3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246,
<C.I. Acid orange>
3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168,
<C.I. Acid red>
88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415,
<C.I.Acid violet>
17, 19, 21, 42, 43, 47, 48, 49, 54, 66, 78, 90,97, 102, 109, 126,
<C.I.Acid blue>
1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350,
<C.I.Acid green>
9, 12, 16, 19, 20, 25, 27, 28, 40, 43, 56, 73, 81, 84, 104, 108, 109,
<C.I.Acid brown>
2, 4, 13, 14, 19, 28, 44, 123, 224, 226, 227, 248, 282, 283, 289, 294, 297, 298, 301, 355, 357, 413,
<C.I.Acid black>
1, 2, 3, 24, 26, 31, 50, 52, 58, 60, 63, 107, 109, 112, 119, 132, 140, 155, 172, 187, 188, 194, 207, 222,
<C.I.Direct yellow>
8, 9, 10, 11, 12, 22, 27, 28, 39, 44, 50, 58, 79, 86, 87, 98, 105, 106, 130, 132, 137, 142, 147, 153,

<C.I.Direct orange>
6, 26, 27, 34, 39, 40, 46, 102, 105, 107, 118,
<C.I.Direct red>
2, 4, 9, 23, 24, 31, 54, 62, 69, 79, 80, 81, 83, 84, 89, 95, 212, 224, 225, 226, 227, 239, 242, 243, 254,
<C.I.Direct violet>
9, 35, 51, 66, 94, 95,
<C.I.Direct blue>
1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291,
<C.I.Direct green>
26, 28, 59, 80, 85,
<C.I.Direct brown>
44, 106, 115, 195, 209, 210, 222, 223,
<C.I.Direct black>
17, 19, 22, 32, 51, 62, 108, 112, 113, 117, 118, 132, 146, 154, 159, 169,
<C.I.Reactive yellow>
2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176,
<C.I.Reactive orange>
1, 4, 5, 7, 11, 12, 13, 15, 16, 20, 30, 35, 56, 64, 67, 69, 70, 72, 74, 82, 84, 86, 87, 91, 92, 93, 95, 107,
<C.I.Reactive red>
2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235,
<C.I.Reactive violet>
1, 2, 4, 5, 6, 22, 23, 33, 36, 38,
<C.I.Reactive blue>
2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236,
<C.I.Reactive green>
8, 12, 15, 19, 21,
<C.I.Reactive brown>
2, 7, 9, 10, 11, 17, 18, 19, 21, 23, 31, 37, 43, 46,
<C.I.Reactive black>
5, 8, 13, 14, 31, 34, 39,
<C.I.Food black>
1, 2.

<Pigments>

A pigment can be used as a coloring agent (hereinafter is also called as a colorant) for an ink-jet ink of the present invention

Employed as pigments usable in the present invention may be conventional organic or inorganic pigments known in the art. Examples include azo pigments such as azo lakes, insoluble azo pigments, condensed azo pigments, or chelate azo pigments; polycyclic pigments such as phthalocyanine pigments, perylene and perylene pigments, antharaquinone pigments, quinacridone pigments, dioxazine pigments, thioindigo pigments, iso-indolinone pigments, or quinophtahrony pigments; dye lakes such as basic dye type lakes or acidic dye type lakes; organic pigments such as nitro pigments, nitroso pigments, aniline black, or daylight fluorescent pigments, and inorganic pigments such as carbon black.

Specific organic pigments are exemplified below.

Listed as pigments for magenta or red are C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48 : 1, C.I. Pigment Red 53 : 1, C.I. Pigment Red 57 : 1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. and Pigment Red 222.

Listed as pigments for orange or yellow are C.I. are Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment

Yellow 74, C.I. Pigment Yellow 93, C.I. Pigment Yellow 94, C.I. Pigment Yellow 128, and C.I. Pigment Yellow 138.

Listed as pigments for green or cyan are C.I. Pigment Blue 15, C.I. Pigment Blue 15 : 2, C.I. Pigment Blue 15 : 3, C.I. Pigment Blue 16, C.I. Pigment Blue 60, and C.I. Pigment Green 7.

A content of a colorant in an ink of the present invention is from 1 to 20 weight%.

Pigment employed in ink of this invention is generally dispersed by a dispersion method well known in the art by use of a dispersant, and applicable dispersants include an anionic surfactant, a nonionic surfactant and a water-soluble polymer dispersant.

A water-soluble polymer dispersant preferably utilized in ink of this invention is preferably the following water-soluble resin with respect to ejection stability.

Water-soluble resins preferably utilized include such as styrene-acrylic acid-acrylic acid alkyl ester copolymer, styrene-acrylic acid copolymer, styrene-maleic acid-acrylic acid alkyl ester copolymer, styrene-methacrylic acid copolymer, styrene-mathacrylic acid-acrylic acid alkyl ester copolymer, styrene-maleic acid half ester copolymer, vinyl naphthalene-acrylic acid copolymer and vinyl naphthalene-maleic acid copolymer.

The content of a water-soluble resin against the total ink is preferably 0.1 - 10 weight% and more preferably 0.3 - 5 weight%. These water-soluble resins may also be utilized in combination of at least two types.

Listed as methods for dispersing pigments are those employing various homogenizers such as a ball mill, a sand mill, an attritor, a roller mill, an agitator, a Henschel mixer, a colloid mill, an ultrasonic homogenizer, a pearl mill, a wet system jet mill, or a paint shaker. Further, it is preferable to employ centrifuges and filters to remove the coarse particles in a pigment dispersion.

Further, in the ink-jet ink of the present invention, it is possible to employ self-dispersion pigments as a colorant. Self-dispersion pigments, as described herein, refer to those pigments which can be dispersed in the absense of dispersing agents. Particularly preferred are pigment particles having a polar group on the surface.

Pigment particles having a polar group on their surface, as described herein, refer to pigments in which the surface of pigments particles is directly modified with a polar group, or those in which polar groups bond, directly or via a joint, organic compounds having an organic pigment mother nucleus.

Examples of such polar group include a sulfonic acid group, a carboxylic acid group, a phosphoric acid group, a boric acid group, and a hydroxyl group. Of these, preferred are the sulfonic acid group, and the carboxylic acids group, of which more preferred is the carboxylic acid group.

The average particle diameter of pigment dispersions employed in the ink of the present invention is preferably at most 500 nm, is more preferably at most 200 nm, but is most preferably at most 100 nm.

<Water-soluble organic solvents>

An ink of the present invention can include a solvent. A water containing solvent is preferred. More preferred is a mixture of water and a water-soluble organic solvent.

Water-soluble organic solvents utilizable in this invention include, for example, alcohols (such as methanol, ethanol, propanol, isopropanol, butanol, isobutanol, secondary butanol, tertiary butanol, pentanol, hexanol, cyclohexanol and benzyl alcohol), polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), polyhydric alcohol ethers (such as ethylene glycol monomethylether, ethylene glycol monoethylether, ethylene glycol monobutylether, diethylene glycol monomethylether, diethylene glycol monoethylether, diethylene glycol monobutylether, propylene glycol monomethylether, propylene glycol monobutylether, ethylene glycol monomethylether acetate, triethylene glycol monomethylether, triethylene glycol monoethylether, triethylene glycol monobutylether, ethylene glycol monophenylether and propylene glycol monophenylether), amines (such as ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyl diethyltriamine and tetramethyl propylenediamine), amides (such as formamide, N,N-dimethyl formamide and N, N-dimethylacetoamide), heterocyclic rings (such as 2-pyrrolidone, N-methyl-2-pyrrolidone, cyclohexyl pyrrolidone, 2-oxazolidone, 1,3-dimethyl-2-imidazolydinone), sulfoxides (such as dimethylsulfoxide).

<Surface active agents>

Surface active agents usable in the present invention are not particularly limited, listed examples being anionic surface active agents such as dialkylsulfosuccinic acid salts, alkylnaphthalenesulfonic acid salts, or fatty acid salts; nonionic surface active agents such as polyoxyethylene alkyl ethers, polyoxyethylene alkyl allyl ethers, acetylene glycols, or polyoxyethylene-polyoxypropylene block copolymers; and cationic surface active agents such as alkylamines or quaternary ammonium salts.

The above-described surface active agents can be used for dispersing pigments. Of these, particularly preferably

employed are anionic surface active agents.

<Additives>

Other than those described above, corresponding to the purpose to enhance various types of performance such as ejection stability, adaptability for printing heads and ink cartridges, storage stability, or image retention properties, if desired, it is possible to incorporate, into the ink-jet ink of the present invention, various additives known in the art such as viscosity modifiers, specific resistance controlling agents, film forming agents, UV absorbers, antioxidants, anti-discoloring agents, fungicides, or anticorrosive agents. Listed as examples may be liquid minute oil droplets composed of paraffin, dioctyl phthalate, tricresyl phosphate, or silicone oil; UV absorbers described in JP-A Nos. 57-74193, 57-87988, and 62-261476; anti-discoloring agents described in JP-A Nos. 57-74192, 57-87989, 60-72785, 61-146591, 1-95091, and 3-13376; and optical brightening agents described in JP-A Nos. 59-42993, 59-52689, 62-280069, 61-242871, and 4-219266.

<Ink-jet recording method>

In the ink-jet recording method of the present invention, droplets of the ink-jet ink is ejected through an ink-jet head onto an recording material to form an image.

An ink-jet head utilized in an ink-jet recording method employing an ink-jet recording sheet of this invention may be either an on-demand mode or a continuous mode. Further, as an ejection mode, listed as specific examples are such as an electrical-mechanical conversion mode (such as a single cavity type, a double cavity type, a vendor type, a piston type, a share mode type and shared wall type), an electrical-heat conversion mode (such as a thermal ink-jet type and a bubble jet type (registered trade mark)) and an electrostatic suction mode (such as an electrolysis control type and a slit jet type), however, any of ejection modes may be utilized.

Any printing methods can be used for the present invention without any limitation among a serial head method and a line-head method. Among them, the ink of the present invention can be applied to an ink-jet recording method using a line head which should be satisfy the most strict requirement for clogging of an ink-jet head.

<Recording materials>

In order to most effectively achieve the effects of the present invention, the recording materials should be selected from an absorptive support such as plain paper, high-quality paper; a low absorptive support such as art paper and coated paper; and a non-absorptive support such as plastic film.

Paper includes coated paper and non-coated paper. Coated paper includes art paper in which the coated amount on one side is approximately 20 g/m$^2$, coated paper in which the coated amount on one side is approximately 10 g/m$^2$, light weight coated paper in which the coated amount on one side is approximately 5 g /m$^2$, ultra light weight coated paper, matte finished coated paper, double tone finished double coated paper, and newsprint paper. Non-coated paper includes printing paper A employing 100 percent chemical pulp, printing paper B employing at least 70 percent chemical pulp, printing paper C employing from 40 to 70 percent chemical pulp, printing paper D employing at most 40 percent chemical pulp, and gravure paper which incorporates mechanical pulp and has been subjected to calendering. More detailed reference will be made to "Saishin Kamikako Binran (Handbbok of Recent Paper Treatments)", edited by Kako Binran Henshuiinkai Hen, published by Tech Times and "Insatsu Kogaku Binran (Printing Engineering Handbook)", edited by Nihon Insatsu Gakkai.

Employed as plain paper, are 80 - 200 $\mu$m thick non-coated paper which belongs to a part of non-coated paper sheets, special printing paper sheets, and information sheets. Examples include high quality printing paper, medium quality printing paper, and low quality printing paper, thin printing paper, ultra-thin printing paper, or special printing paper such as high quality colored paper, form paper sheets, PPC sheets, and other kinds such as information sheets. Specifically, available are the paper sheets described below and various modified/treated paper sheets, but the present invention is not limited thereto.

Listed are HIGH QUALITY PAPER, HIGH QUALITY COLORED PAPER, RECYCLED PAPER, COPYING PAPER/COLOR, OCR PAPER, NON-CARBON PAPER/SYNTHETIC PAPER such as UPO 60, 80, and 110 MICRON, or UPOCOAT 70 and 90 MICRON, others such as ONE SIDE ART PAPER 68 kg, COATED PAPER 90 kg, MATTE FORM PAPER 70, 90, and 110 kg, FOAMED PET 38 micron, and MITSUORIKUN (all available from Kobayashi Kirokushi Co., Ltd.), OK HIGH QUALITY PAPER, NEW OK HIGH QUALITY PAPER, SUN FLOWER, PHOENIX, OK ROYAL WHITE, HIGH QUALITY EXPORT PAPER (NPP, NCP, NWP, and ROYAL WHITE), OK BOOK PAPER, OK CREAM BOOK PAPER, CREAM HIGH QUALITY PAPER, OK MAP PAPER, OK ISHIKARI, KYUUREI, OK FORM, OKH, and NIP-N (all available from Shin-Oji Paper Co., Ltd.); KINO, TOKO, EXPORT HIGH QUALITY PAPER, SPECIAL DEMAND HIGH QUALITY PAPER, BOOK PAPER, BOOK PAPER L, PALE CREAM BOOK PAPER, PRIMARY SCHOOL SCIENCE

TEXT BOOK PAPER, CONTINUOUS SLIP PAPER, HIGH QUALITY NIP PAPER, GINKAN, KINYO, KINYO (W), BRIDGE, CAPITAL, GINKAN BOOK PAPER, HARP, HARP CREAM, SK COLOR, SECURITY PAPER, OPERA CREAM, OPERA, KYP CARTE, SYLVIA HN, EXCELLENT FORM, and NPI FORM DX (all available from Nippon Paper Co., Ltd.); PEARL, KINRYO, PALE CREAM HIGH QUALITY PAPER, SPECIAL BOOK PAPER, SUPER BOOK PAPER, DIAFORM, and INK-JET FORM (all available from Mitsubishi Paper Mills Ltd.); KINMO V, KINMO SW, HAKUZO, HIGH QUALITY PUBLISHING PAPER, CREAM KINMO, CREAM HAKUZO, SECURITY/TRADABLE COUPON PAPER, BOOK PAPER, MAP PAPER, COPY PAPER, and HNF (all available from Hokuetsu Paper Mills, Ltd.); SIORAI, TELEPHONE DIRECTORY COVER, BOOK PAPER, CREAM SHIORAI, CREAM SHIORAI MEDIUM ROUGH, CREAM SHIORAI HIGH ROUGH, and DSK (all available from Daishowa Paper Manufacturing Co., Ltd.); SENDAI MP HIGH QUALITY PAPER, KINKO, RAICHO HIGH QUALITY, HANGING PAPER, COLORED PAPER BASE PAPER, DICTIONARY PAPER, CREAM BOOK, WHITE BOOK, CREAM HIGH QUALITY PAPER, MAP PAPER, and CONTINUOUS SLIP PAPER (Chuetsu Paper & Pulp Co., Ltd.); OP KINO (CHUETSU), KINSA, REFERENCE PAPER, TRADABLE COUPON PAPER (WHITE)), FORM PRINTING PAPER, KRF, WHITE FORM, COLOR FORM, (K)NIP, FINE PPC, and KISHU INKJET PAPER (all produced by Kishu Paper Co., Ltd.); TAIOU, BRIGHT FORM, KANT, KANT WHITE, DANTE, CM PAPER, DANTE COMIC, HEINE, PAPER BACKS PAPER, HEINE S, NEW AD PAPER, UTRILLO EXCEL, EXCEL SUPER A, KANTO EXCEL, EXCEL SUPER B, DANTE EXCEL, HEINE EXCEL, EXCEL SUPER C, EXCEL SUPER D, AD EXCEL, EXCEL SUPER E, NEW BRIGHT FORM, and NEW BRIGHT NIP (all available from Daio Paper Corporation); NICHIRIN, GETSURIN, UNREI, GINGA, HAKUUN, WAISU, GETURIN ACE, HAKUUN ACE, and UNKIN ACE (all produced by Japan Paper Industry Co., Ltd.); TAIOU, BRIGHT FORM and BRIGHT NIP (all avaialbew from Nagoya Pulp Co., Ltd.); BOTAN A, KINBATO, TOKU BOTAN, SHIROBOTAN A, SHIROBOTAN C, GINBATO, SUPER SHIROBOTAN A, PALE CREAM SHIROBOTAN, SPECIAL MEDIUM QUALITY PAPER, SHIROBATO, SUPER MEDIUM QUALITY PAPER, AO BATO, AKA BATO, KIN BATO M SNOW VISION, KIN BATO SNOW VISION, SHIRO BATO M, SUPER DX, HANAMASU O, AKA BATO M, and HK SUPER PRINTING PAPER (all manufactured by Honshu Paper Co., Ltd.); STAR LINDEN (A·AW), STAR ELM, STAR MAPLE, STAR LAUREL; STAR POPLAR, MOP, STAR CHERRY I, CHERRY I SUPER, CHERRY II SUPER, STAR CHERRY III, STAR CHERRY IV, CHERRY III SUPER, and CHERRY IV SUPER (all produced by Marusumi Paper Co., Ltd.); SHF (produced by Toyo Pulp Co., Ltd.); and TRP (produced by Tokai Pulp Co., Ltd.).

The representative papers for printing are TOKUHISI ART PAPER (produced by Mitsubishi Paper Mil Co. Ltd.) and OK TOP COAT N (produced by Oji Paper Co. Ltd.) Employed as various films may be any of those which are commonly employed. Examples include polyester film, polyolefin film, polyvinyl chloride film, and polyvinylidene chloride film. Further employed may be resin-coated paper and synthetic paper such as UPO paper.

Various ink-jet recording media are those which incorporate, as a substrate, an absorptive, or non-absorptive support having thereon an ink absorptive layer. Some ink absorptive layers are composed of a coating layer, a swelling layer and a minute void layer.

In the above swelling layer, ink is absorbed via swelling of the ink absorptive layer composed of water-soluble polymers. The minute void layer is composed of minute inorganic or organic particles at a secondary particle diameter of about 20 - about 200 nm, as well as binders, and minute voids at about 100 nm absorb ink.

In recent years, in order to produce images of conventional photographic quality, preferably employed are ink-jet recording media which incorporate, as a substrate, an RC paper prepared by covering both sides of a paper substrate with olefin resins, having thereon the aforesaid minute void layer.

## EXAMPLES

The present invention will now be practically described with reference to examples, however the present invention is not limited thereto.

<<Synthesis of Actinic Radiation Crosslinking Polymer Compounds>>

(Synthesis of Actinic Radiation Crosslinking Polymer Compound 1)

While heating, 100 g of polyacrylic acid (at a weight average molecular weight of 800,000) was dissolved in 750 g of methanol. Thereafter, 16 g of 4-hydroxybutylacrylateglycidinyl ether, and 11 g of pyridine as a catalyst, were added. The resulting mixture was maintained at 60 °C while stirring for 24 hours. Further, the system was heated to 95 °C and methanol was distilled out while dripping water. The resulting system was subjected to ion exchange resin (PK-216H, produced by Mitsubishi Chemical Corp.) treatment, and pyridine was removed, resulting in an aqueous solution at a concentration of non-volatile components of 15 percent. Subsequently, the above aqueous solution was mixed with IRUGACURE 2959 (produced by Ciba Specialty Chemicals, Ltd.) in an amount of 0.1 g per 100 g of the above 15 percent aqueous solution. Thereafter, the resulting mixture was diluted with ion-exchanged water, whereby 10 percent Aqueous Actinic Radiation Crosslinking Polymer Compound Solution 1 was prepared.

(Synthesis of Actinic Radiation Crosslinking Polymer Compound 2)

Charged into a reaction vessel were 56 g of glycidyl methacrylate, 48 g of p-hyroxybenzaldehyde, 2 g of pyridine, and 1 g of N-nitroso-phenylhydroxyamine ammonium salt, and the resulting mixture was stirred over 8 hours in a 80 °C water bath.

Subsequently, after dispersing 45 g of saponified polyvinyl acetate of a polymerization degree of 2,200 and a saponification ratio of 88 percent into 225 g of ion-exchanged water, added to the resulting dispersion were 4.5 g of phosphoric acid and p-(3-methacryloxy-2-hydroxypropyloxy)benzaldehyde in an amount to result in a modification ratio of 3.0 mol percent with respect to polyvinyl alcohol, and the resulting mixture was stirred for 6 hours at 90 °C, and then cooled to room temperature. Thereafter, 30 g of a basic ion exchange resin was added and the resulting mixture was stirred for one hour.

Subsequently, the above ion-exchange resin was removed by filtration, and IRUGACURE 2959 (described above) was then mixed in an amount of 0.1 g per 100 g of a 15 percent aqueous solution. Thereafter, the resulting mixture was diluted by the addition of ion-exchanged water, whereby 10 percent Aqueous Actinic Radiation Crosslinking Polymer Compound Solution 2 was prepared.

(Synthesis of Actinic Radiation Crosslinking Polymer Compounds 3 - 7)

Actinic Radiation Crosslinking Polymer Compounds 3 - 7 were synthesized in the same manner as Actinic Radiation Crosslinking Polymer Compounds 2, except that the polymerization degree and the saponification ratio of the saponified products were controlled as listed in Table 1 and further the introduction modification ratio was also controlled by varying the addition amount of p-(3-methacryloxy-2-hydroxypropyloxy)benzaldehyde. Subsequently, 10 percent aqueous Actinic Radiation Crosslinking Polymer Compound Solutions 3 - 7 were prepared.

(Actinic Radiation Crosslinking Polymer Compound 8)

The compound (RSP of a polymerization degree of 500, a saponification ratio of 88 percent, and a modification ratio of 3 mol percent of the main chain, produced by Toyo Synthetic Industries, Co.), represented by Formula (4) in which R resents a p-phenylene group, was designated as Actinic Radiation Crosslinking Polymer Compound 8. The above compound was diluted by the addition of water, whereby 10 percent Aqueous Actinic Radiation Crosslinking Polymer Compound 8 was prepared.

<<Preparation of Ink Sets>>

Ink Sets 1 - 19 were prepared as described below.

(Preparation of Pigment Dispersions)

<Preparation of Magenta Pigment Dispersion>

The additives, described below, were mixed and the resulting mixture was dispersed employing a sand grinder charged with 0.6 mm zirconia beads at a volume ratio of 50 percent, whereby a magenta pigment dispersion at a magenta pigment content of 15 percent was prepared. The average diameter of magenta pigment particles incorporated in the resulting magenta pigment dispersion was 80 nm. Further, the particle diameter was determined employing ZETA SIZER 1000HS, produced by Malvern, Inc.

| | |
|---|---|
| C.I. Pigment Red 122 | 15 parts |
| JOHNCRYL 61 (styrene-acryl based resinous dispersion at 30% solids, produced by Johnson Co.) | 10 parts |
| Glycerin | 15 parts |
| Ion-exchanged water | 60 parts |

(Preparation of Black Pigment Dispersion)

CABO-JET 300, a carbon black self-dispersion product, produced by Cabot Corp., was diluted by the addition of ion-exchanged water, whereby a carbon black pigment dispersion incorporating 15 percent carbon black was prepared. The average particle diameter of carbon black particles incorporated in the resulting carbon black pigment dispersion was 148 nm. The particle diameter was determined employing ZETER SIZER 1000HS, produced by Malvern, Inc.

(Preparation of Ink Set 1)

<Preparation of Magenta Pigment Ink 1>

| | |
|---|---|
| Magenta pigment dispersion (15% solids) | 20 parts |
| Aqueous Solution of Actinic Radiation Crosslinking Polymer Compound 1 (10% solids) | 28 parts |
| Resin microparticles: SUPERFLEX 110 (minute urethane based resinous particles at a Tg of 48 °C, a particle diameter of 0.09 μm, and 19% solids, produced by Dai-ichi Kogyo Seiyaku Co., Ltd.) | 4.5 parts |
| Triethylene glycol monoethyl ether | 15 parts |
| 1,2-Hexanediol | 5 parts |
| OLFIN E1010 Produced by Nissin Chemical Co., Ltd.) | 1 part |
| Fungicide: PROXEL GXL | 0.3 part |

The amount of the resin microparticles described above corresponds to that of the solids.
The total volume was brought to 100 parts by the addition of ion-exchanged water.

<Preparation of Black Pigment Ink 1>

Black Pigment Ink 1 was prepared in the same manner as above Magenta Pigment Ink 1, except that the magenta pigment dispersion was replaced with the black pigment dispersion. The combination of Magenta Pigment Ink 1 and Black Pigment Ink 1 was designated as Ink Set 1.

(Preparation of Ink Set 2 - 16)

<Magenta Pigment Ink 2 + Black Pigment Ink 2 = Ink Set 2> through <Magenta Pigment Ink 16 + Black Pigment Ink 16 = Ink Set 16> were prepared in the same manner as above Ink Set 1, except that the type of actinic radiation crosslinking polymer compounds, the type of resin microparticles, and the addition amount (in percent by weight) were varied as described in Table 1.

(Preparation of Ink Set 17)

<Preparation of Magenta Pigment Ink 17>

| | |
|---|---|
| Magenta pigment dispersion (15% solids) | 20 parts |
| Aqueous ultraviolet radiation curable type urethane acrylate based resinous emulsion (40% solids, WBR-839, trade name, produced by Taisei Kako Co.) | 7 parts |
| 2-Pyrrolidinone | 15 parts |
| Ethylene glycol | 10 parts |
| OLFIN E1010 (produced by Nissin Chemical Co., Ltd.) | 1 part |
| Fungicide: PROXEL GXL | 0.3 part |
| Ion-exchanged water to make | 100 parts |

<Preparation of Black Pigment Ink 17>

Black Pigment Ink 17 was prepared in the same manner as above Magenta Pigment Ink 17, except that the magenta pigment dispersion was replaced with the black pigment dispersion. The combination of Magenta Pigment Ink 17 and Black Pigment Ink 17 was designated as Ink Set 17.

(Preparation of Ink Set 18)

Magenta Pigment Ink 18 + Black Pigment Ink 18 = Ink Set 18 was prepared in the same manner as above Ink Set 6, except that Actinic Radiation Crosslinking Polymer Compound 6 was replaced with water.

(Preparation of Ink Set 19)

<Preparation of Magenta Pigment Ink 19>

| | |
|---|---|
| Magenta pigment dispersion (15% solids) | 20 parts |
| Aqueous ultraviolet radiation curable type urethane acrylate based resinous emulsion (40% solids, WBR-839, trade name, produced by Taisei Kako Co.) | 7 parts |
| Resin microparticles: SUPERFLEX (urethane based resin microparticles at a Tg of 48 °C and a particle diameter of 0.09 μm, and 30% solids, produced by Dai-ichi Kogyo Seiyaku Co., Ltd.) | 4.5 parts |
| 2-Pyrrolidinone | 15 parts |
| Ethylene glycol | 10 parts |
| OLFIN E1010 (produced by Nissin Chemical Co.) | 1 part |
| Fungicide: PROXEL GXL | 0.3 part |
| Ion-exchanged water to make | 100 parts |

<Preparation of Black Pigment Ink 19>

Black Pigment Ink 19 was prepared in the same manner as above Magenta Pigment Ink 19, except that the magenta pigment dispersion was replaced with the black pigment dispersion. A combination of Magenta Pigment Ink 19 and Black Pigment Ink 19 was designated as Ink Set 19.

Ink Sets 1 - 19, prepared as above, are detailed in Table 1.

Table 1

| Ink Set No. | Actinic Radiation Crosslinking Polymer Compound | | | | Minute Resinous Particles | | | | Remarks |
|---|---|---|---|---|---|---|---|---|---|
| | No | *1 | *2 | *3 | Type | Tg (°C) | Average Particle Diameter (μm) | *4 | |
| 1 | 1 | | | | SUPERFLEX 110 | 48 | 0.09 | 150% | Inv. |
| 2 | 2 | 88% | 2200 | 3 | SUPERFLEX 110 | 48 | 0.09 | 25% | Inv. |
| 3 | 3 | 88% | 1500 | 3 | SUPERFLEX 111 | 48 | 0.09 | 50% | Inv. |
| 4 | 4 | 88% | 150 | 3 | SUPERFLEX 110 | 48 | 0.09 | 150% | Inv. |
| 5 | 5 | 88% | 400 | 0.5 | SUPERFLEX 110 | 48 | 0.09 | 100% | Inv. |
| 6 | 6 | 88% | 400 | 4.5 | SUPERFLEX 110 | 48 | 0.09 | 100% | Inv. |
| 7 | 8 | 88% | 400 | 3 | SUPERFLEX 110 | 48 | 0.09 | 100% | Inv. |
| 8 | 7 | 88% | 400 | 3 | SUPERFLEX E-2500 | 42 | 0.96 | 25% | Inv. |
| 9 | 7 | 88% | 400 | 3 | SUPERFLEX 300 | -42 | 0.07 | 100% | Inv. |
| 10 | 7 | 88% | 400 | 3 | SUPERFLEX 420 | -10 | 0.01 | 100% | Inv. |

(continued)

| Ink Set No. | Actinic Radiation Crosslinking Polymer Compound | | | | Minute Resinous Particles | | | | Remarks |
|---|---|---|---|---|---|---|---|---|---|
| | No | *1 | *2 | *3 | Type | Tg (°C) | Average Particle Diameter (μm) | *4 | |
| 11 | 7 | 88% | 400 | 3 | SUPERFLEX 130 | 101 | 0.02 | 100% | Inv. |
| 12 | 7 | 88% | 400 | 3 | SUPERFLEX 110 | 48 | 0.09 | 10% | Inv. |
| 13 | 7 | 88% | 400 | 3 | SUPERFLEX 110 | 48 | 0.09 | 3% | Inv. |
| 14 | 7 | 88% | 400 | 3 | SUPERFLEX 110 | 48 | 0.09 | 205% | Inv. |
| 15 | 7 | 88% | 400 | 3 | JOHNCRYL 450 | 16 | 0.06 | 100% | Inv. |
| 16 | 7 | 88% | 400 | 3 | SX1105 produced by Nihon Zeon Co) | 0 | 0.1 | 100% | Inv. |
| 17 | UV curable type resinous emulsion | | | | (-) | | | | Comp. |
| 18 | (-) | | | | SUPERFLEX 110 | 48 | 0.09 | 150% | Comp. |
| 19 | UV curable type resinous emulsion | | | | SUPERFLEX 110 | 48 | 0.09 | 150% | Comp. |

*1: Saponification Ratio ,*2: Degree of Polymerization,
*3: Modification Ratio (mol%), *4: Solid Incorporating Amount to Pigment (weight%)
Inv.: Present Invention, Comp.: Comparative Example

Each of the resin microparticles, described in Table 1, is detailed below.

SUPERFLEX 110: urethane based microparticles at a Tg of 48 °C and an average particle diameter of 0.09 μm, produced by Dai-ichi Kogyo Seiyaku Co., Ltd.

SUPERFLEX 130: urethane based microparticles at a Tg of 101 °C and an average particle diameter of 0.02 μm, produced by Dai-ichi Kogyo Seiyaku Co., Ltd.

SUPERFLEX 300: urethane based microparticles at a Tg of -42 °C and an average particle diameter of 0.07 μm, produced by Dai-ichi Kogyo Seiyaku Co., Ltd.

SUPERFLEX 420: urethane based microparticles at a Tg of -10 °C and an average particle diameter of 0.01 μm, produced by Dai-ichi Kogyo Seiyaku Co., Ltd.

SUPERFLEX E-2500: urethane based microparticles at a Tg of 42 °C and an average particle diameter of 0.96 μm, produced by Dai-ichi Kogyo Seiyaku Co., Ltd.

JOHNCRYL 450: styrene-acryl based microparticles at a Tg of 16 °C and an average particle diameter of 0.10 μm, produced by Johncryl Co.

SX 1105: styrene-butadiene based microparticles at a Tg of 0 °C and an average particle diameter of 0.10 μm, produced by Nihon Zeon Co., Ltd.

<<Formation and Evaluation of Ink-Jet Images>>

(Evaluation of Ink Storage Stability)

Each ink set was stored at an ambience of 60 °C for 10 days. Then, the state of each ink was visually observed and storage stability of the ink was evaluated based on the following criteria.

A: no precipitates in neither magenta nor black ink were Noted after 10 days of storage
B: precipitates in either the magenta or black ink was noted after 10 days of storage
C: precipitates in either the magenta or black ink were noted after 5 days of storage
D: precipitates were noted in both magenta and black inks after 5 days of storage
E: precipitates were noted in both magenta and black inks after 3 days of storage

(Continuous Ejection Stability: Nozzle Clogging Resistance)

Under an ambience of 20 °C and 30 percent relative humidity, each of the ink sets was loaded in an ink-jet printer fitted with a piezo type head at an nozzle orifice diameter of 20 μm, a driving frequency of 10 kHz, and 128 nozzles, whereby ejection was continuously conducted for one hour without cleaning under the condition in which 12 pl was ejected per ink droplet. Thereafter, the ejection state was visually observed and continuous ejection stability was evaluated based on the following criteria.

A: normal ejection was noted from all nozzles
B: clogging was noted at 1 - 3 nozzles but ejection was restored by suction cleaning from the nozzle plane
C: clogging was noted at 4 or more nozzles, while at one nozzle, it was not possible to restored ejection employing suction cleaning, resulting in the commercially viable range
D: clogging was noted at 7 or more nozzles, while at two nozzles, it was not possible to restore ejection employing suction cleaning
E: clogging was noted at 10 or more nozzles, while at 3 or more nozzles, it was not possible to restore ejection employing suction cleaning.

<Evaluation of Intermittent Ejection Stability>

Under an ambience of 20 °C and 30 percent relative humidity, each of the ink sets was loaded in an ink-jet printer fitted with a piezo type head at a nozzle orifice diameter of 20 μm, a driving frequency of 10 kHz, and a number of nozzles of 128. Under the condition in which 12 pl was ejected per ink droplet, 1) ejection was continuously conducted for 10 seconds, subsequently, 2) after interception of ejection for a specified period, and 3) continuous ejection was resumed for 10 seconds. During this operation, the interception period of 2) was changed via a number of steps of 1 to 40 seconds, and the interception period was determined so that at the start of the resumption of ejection of 3), non-uniformity resulted in the ejection direction and it was possible to achieve stable resumption, whereby intermittent ejection stability was evaluated based on the following criteria.

A: stable ejection was resumed after an interception period of 30 - 40 seconds
B: stable ejection was resumed after an interception period of the suspension 20 - 29 seconds, but when the interception period was at least 30 seconds, non-uniform ejection occurred from some nozzles
C: stable ejection was resumed after an interception period of 10 - 19 seconds, but when the interception period was at least 20 seconds, non-uniform ejection occurred from some nozzles
D: stable ejection was resumed after the interception period of 5 - 9 seconds, but when the interception period was at least 10 seconds, non-uniform ejection occurred
E: stable ejection was resumed only after an interception period of at most 4 seconds

(Evaluation of Feathering Resistance)

Each of the ink sets was loaded in an on-demand type ink-jet printer at a maximum recording density of 720 x 720 dpi, fitted with a piezo type head at an nozzle orifice diameter of 25 μm, a driving frequency of 12 kHz, 128 nozzles, and a nozzle density of 180 dpi, whereby 100 μm fine black lines were printed on high quality paper (FIRST CLASS PAPER, produced by Konica Minolta Business Technologies, Inc.).
Further, ejection was continuously conducted, and exposure was performed 0.1 second after deposition of ink droplets, employing a 120 G1/cm metal halide lamp (MAL 400NL, source power of 3 kW·hour, produced by Nippon Denchi Co., Ltd.).
The presence of feathering of lines, printed as above, were visually observed and feathering resistance was evaluated based on the following criteria.

A: fine printed lines were clearly recognizable
B: very slight feathering was noted, however resulting in small effect to the fine lines
C: slight feathering was noted, but was within the commercially viable range

D: feathering was clearly noted, and the resulting quality Was beyond the commercially viable range
E: marked feathering resulted in unclear boundaries of the fine lines, which was totally inapplicable for commercial practice

(Evaluation of Color Bleeding Resistance)

Each of the ink sets was loaded in an on-demand type ink-jet printer at a maximum recording density of 720 x 720 dpi, fitted with a piezo type head at an nozzle orifice diameter of 25 μm, a driving frequency of 12 kHz, 128 nozzles of, and a nozzle density of 180 dpi, and an image pattern, in which printing point varying black characters were arranged on a solid magenta image, was outputted on an art paper (NK ART KINFUJI N, produced by Oji Paper Co., Ltd.). The term "dpi" in the present invention means the number of dots per 2.54 cm.
Subsequently, each ink was continuously ejected, and exposure was performed 0.1 second after deposition of ink droplets, employing a 120 W/cm metal halide lamp (MAL 400NL, at a source power of 3 kW·hour, produced by Nippon Denchi Co., Ltd.).
The presence of color mixing on the image, produced as above, was visually observed, and color bleeding resistance was evaluated based on the following criteria.

A: no color mixing was noted
B: slight color mixing was noted but 5-point characters were recognizable
C: some color mixing was noted, but 7-point characters were recognizable, remaining within the commercially viable range
D: significant color mixing was noted and only 9-point characters were recognizable
E: significant color mixing was noted and even 9-point Characters were not recognizable

(Evaluation of Beading Resistance)

By employing a piezo type head at an nozzle orifice diameter of 25 μm, a driving frequency of 12 kHz, 128 nozzles, and a nozzle density of 180 dpi, as well as an on-demand type ink-jet printer at a maximum recording density of 720 x 720 dpi, a solid magenta image of 10 cm x 10 cm was printed on art paper (NK ART KINFUJI N, produced by Oji Paper Co., Ltd.). The printed solid images were visually observed and beading resistance was evaluated based on the following criteria.
Further, the ink was continuously ejected, and exposure was performed 0.1 second after deposition of ink droplets, employing a 120 W/cm metal halide lamp (MAL 400NL, at a source power of 3 kw · hour, produced by Nippon Denchi Co., Ltd.).

A: a uniform image was noted
B: when carefully viewed, mottling noises less than 6 were noted
C: when carefully viewed, 6 - 11 mottling noises were noted
D: 12 - 19 obvious mottling noises were noted
E: at least 20 mottling noised were noted

In the above, criteria D and E indicated a product exhibiting quality problems.

(Evaluation of Abrasion Resistance)

Each of the ink sets was loaded in an on-demand type ink-jet printer at a maximum recording density of 720 x 720 dpi, fitted with a piezo type head at an nozzle orifice diameter of 25 μm, a driving frequency of 12 kHz, 128 nozzles, and a nozzle density of 180 dpi, and a 10 cm x 10 cm solid magenta image was printed on art paper (NK ART KINFUJI N, produced by Oji Paper Co., Ltd.) as well as on high quality paper (FIRST CLASS PAPER, produced by Konica Minolta Business Technologies, Inc.).
The ink was continuously ejected, and exposure was performed 0.1 second after deposition of ink droplets, employing a 120 W/cm metal halide lamp (MAL 400NL, at a source power of 3 kW·hour, produced by Nippon Denchi Co., Ltd.), whereby image evaluation samples were prepared.
After rubbing the image sample, prepared as above, ten times, employing an eraser (MONO, produced by Tombow Pencil Co., Ltd.), any stain formation on the printed portion was visually observed and abrasion resistance was evaluated based on the following criteria.

A: no change of the printed image was noted

B: when viewed closely, slight staining of the printed image was noted
C: some staining of the printed image was noted, but the print was within the commercially viable range
D: staining was clearly noted on the printed image and the print was beyond the commercially viable range
E: the printed image was fairly stained, resulting in no commercial viability

(Evaluation of Waterfastness)

The image evaluation sample was rubbed 5 times with KIMWIPE S-200 (produced by CRECIA Corp.) soaked with water, and any decrease in image density was visually observed, whereby waterfastness was evaluated based on the following criteria.

A: no decrease in color density was noted
B: a slight decrease in color density was noted, but the overall image exhibited no problem
C: some decrease in color density was noted and slight degradation of image quality was also noted, but the resulting quality was within the commercially viable range
D: a major decrease in color density was noted, resulting in a drop of quality beyond the commercially viable range
E: a significant decrease in color density was noted and the image was markedly stained, resulting in no commercial viability

(Evaluation of Glossiness)

Each of the ink sets was loaded in an on-demand type ink-jet printer at a maximum recording density of 720 x 720 dpi, fitted with a piezo type head at an nozzle orifice diameter of 25 μm, a driving frequency of 12 kHz, 128 nozzles, and a nozzle density of 180 dpi, and a 10 cm x 10 cm solid magenta image was printed on art paper (NK ART KINFUJI N, produced by Oji Paper Co., Ltd.).
Further, the ink was continuously ejected, and exposure was performed 0.1 second after deposition of ink droplets, employing a 120 W/cm metal halide lamp (MAL 400NL, at a source power of 3 kW·hour, produced by Nippon Denchi Co., Ltd.), whereby image evaluation samples were prepared.
The sense of glossiness of image evaluation samples was visually observed and evaluated based on the following criteria.

A: difference in glossiness between the recorded surface and the background was barely noted, resulting in no problems of quality
B: a slight difference in glossiness between the recorded surface and the background was noted
C: a difference in glossiness between the recorded surface and the background was visually noted, but was within the commercially viable range
D: a difference in glossiness between the recorded surface and the background was obvious and the glossiness of the recorded surface was less than that of the background
E: a clear difference in glossiness between the recorded surface and the backgrounds was evident, and the glossiness of the recorded surface was much lower than that of the background

Table 2 show the results.

Table 2

| Ink Set No. | Feathering | Bleeding | Beading | Water-fastness | | Abrasion Resistance | | Glossiness | Ejection Stability | | Storage Stability |
|---|---|---|---|---|---|---|---|---|---|---|---|
| *1 | Plain Paper | Art Paper | Art Paper | Plain Paper | Art Paper | Plain Paper | Art Paper | Art Paper | *2 | *3 | |
| 1 | C | C | B | B | B | B | B | B | B | B | B |
| 2 | A | A | A | B | A | B | B | B | B | C | B |
| 3 | A | A | A | B | A | B | B | B | B | C | B |
| 4 | C | C | B | B | B | B | A | A | A | A | A |
| 5 | B | B | C | B | B | A | A | A | A | A | A |
| 6 | A | A | A | A | A | B | A | B | A | A | B |
| 7 | B | B | B | B | B | A | A | B | A | A | B |
| 8 | A | A | A | A | A | A | A | C | B | B | B |
| 9 | A | A | A | B | B | A | A | B | B | A | A |
| 10 | A | A | A | A | A | A | A | A | A | A | A |
| 11 | A | A | A | A | A | A | A | A | A | A | A |
| 12 | A | A | A | A | A | A | A | A | A | A | A |
| 13 | A | A | A | B | B | B | B | B | A | A | A |
| 14 | A | A | A | A | A | A | A | B | B | B | B |
| 15 | A | A | A | B | B | B | B | C | A | A | A |
| 16 | A | A | A | B | B | B | B | C | A | A | A |
| 17 | D | D | DD | D | D | D | D | DD | D | DD | B |
| 18 | DD | DD | DD | D | C | D | D | DD | B | B | B |
| 19 | D | D | DD | D | D | DD | D | DD | D | DD | DD |

*1: Recording Media, *2: Continuous Ejection Property,
*3: Intermittent Ejection Property

As can clearly be seen from the results described in Table 2, compared to comparative examples, Ink Sets constituted of the inks of the present invention, which incorporated resin microparticles and polymer compounds which have a plurality of side chains on the main hydrophilic resin, and when exposed to actinic radiation, are capable of being crosslinked between the side chains resulted in excellent ejection stability during ink ejection, exhibited excellent feathering resistance, waterfastness, and abrasion resistance when printed onto plain paper, and further resulted in excellent color bleeding resistance, beading resistance, abrasion resistance and waterfastness of images which were printed on art paper, as well as exhibited enhanced glossiness.

## Claims

1. An ink-jet ink comprising a colorant, resin microparticles and a polymer
wherein the polymer has a hydrophilic main chain and a plurality of side chains and the polymer is capable of undergoing crosslinking between the side chains by irradiation with actinic radiation;
the resin microparticles have a glass transition point (Tg) in the range of -30 to 150 °C; and
the resin microparticles have an average particle diameter of 10 to 200 nm.

2. The ink-jet ink of claim 1,
wherein the content of the resin microparticles is in an amount of 5 to 200 weight% based on a weight of the colorant in the ink-jet ink.

3. The ink-jet ink of claim 1 or 2
wherein the resin microparticles are made of polyurethane.

4. The ink-jet ink of any one of claims 1 to 3,
wherein the hydrophilic main chain of the polymer is a saponified polyvinyl acetate having a saponification ratio of 77 to 99% and the polymer has a degree of 200 to 4000.

5. The ink-jet ink of any one of claims 1 to 4,
wherein the polymer has a modification ratio of the side chain to the main hydrophilic chain is 0.8 to 4 mole%.

6. The ink-jet of any one of claims 1 to 5, further comprising a watersoluble photopolymerization initiator.

7. An ink-jet ink set comprising two or more ink-jet inks,
wherein at least one of the ink-jet inks is the ink-jet ink of any one of claims 1 to 6.

8. A method of forming an ink-jet image comprising the steps of:

   jetting droplets of the ink-jet ink of any one of claims 1 to 6 through an ink-jet head onto a recording material;
   irradiating the jetted droplets on the recording material with ultraviolet radiation; and
   drying the irradiated droplets on the recording material.

9. A method of forming an ink-jet image comprising the steps of:

   jetting droplets of the ink-jet ink set of claim 7 through an ink-jet head onto an recording material;
   irradiating the jetted droplets on the recording material with ultraviolet radiation; and
   drying the irradiated droplets on the recording material.

10. The method of forming an ink-jet image of claim 8 or 9,
wherein the,recording material is low absorptive support or a non-absorptive support.

11. The method of forming an ink-jet image of claim 8 or 9,
wherein the recording material is a plain paper.

## Patentansprüche

1. Eine Tintenstrahltinte, umfassend einen Farbstoff, Harz-Mikropartikel und ein Polymer, worin das Polymer eine

hydrophile Hauptkette und eine Mehrzahl an Seitenketten aufweist und das Polymer in der Lage ist, eine Vernetzung zwischen den Seitenketten durch Strahlung mit aktinischer Strahlung durchzuführen;

die Harz-Mikropartikel einen Glasübergangspunkt (Tg) in dem Bereich von -30 bis 150 °C aufweisen; und
die Harz-Mikropartikel einen mittleren Teilchendurchmesser von 10 bis 200 nm aufweisen.

2. Die Tintenstrahltinte nach Anspruch 1 , worin der Gehalt der Harz-Mikropartikel in einem Bereich von 5 bis 200 Gew.-%, basierend auf dem Gewicht des Farbstoffes in der Tintenstrahltinte, beträgt.

3. Die Tintenstrahltinte nach Anspruch 1 oder 2, worin die Harz-Mikropartikel aus Polyurethan hergestellt sind.

4. Die Tintenstrahltinte nach einem der Ansprüche 1 bis 3, worin die hydrophile Hauptkette des Polymers ein verseiftes Polyvinylacetat mit einem Verseifungsverhältnis von 77 bis 99 % ist und das Polymer einen Grad von 200 bis 400 aufweist.

5. Die Tintenstrahltinte nach einem der Ansprüche 1 bis 4, worin das Polymer ein Modifikationsverhältnis der Seitenkette zu der hydrophilen Hauptkette von 0,8 bis 4 Mol-% aufweist.

6. Eine Tintenstrahltinte gemäß einem der Ansprüche 1 bis 5, welche darüber hinaus einen wasserlöslichen Photopolymerisationsinitiator umfasst.

7. Ein Tintenstrahltintenset, umfassend zwei oder mehrere Tintenstrahltinten, worin mindestens eine der Tintenstrahltinten die Tintenstrahltinte gemäß einem der Ansprüche 1 bis 6 ist.

8. Ein Verfahren zum Bilden eines Tintenstrahlbildes, umfassend die Schritte von:

Abstrahlen von Tropfen der Tintenstrahltinte gemäß einem der Ansprüche 1 bis 6 durch einen Tintenstrahlkopf auf ein Aufzeichnungsmaterial;
Bestrahlen der auf das Aufzeichnungsmaterial abgestrahlten Tropfen mit ultravioletter Strahlung; und
Trocknen der auf dem Aufzeichnungsmaterial bestrahlten Tropfen.

9. Ein Verfahren zum Bilden eines Tintenstrahlbildes, umfassend die Schritte von:

Abstrahlen von Tropfen des Tintenstrahltintensets gemäß Anspruch 7 durch einen Tintenstrahlkopf auf ein Aufzeichnungsmaterial;
Bestrahlen der auf das Aufzeichnungsmaterial abgestrahlten Tropfen mit ultravioletter Strahlung; und
Trocknen der auf dem Aufzeichnungsmaterial bestrahlten Tropfen.

10. Das Verfahren des Bildens eines Tintenstrahlbildes gemäß Anspruch 8 oder 9, worin das Aufzeichnungsmaterial ein niedrigabsorbierender Träger oder ein nicht absorbierender Träger ist.

11. Das Verfahren des Bildens eines Tintenstrahlbildes nach Anspruch 8 oder 9, worin das Aufzeichnungsmaterial ein Normalpapier ist.

## Revendications

1. Encre pour jet d'encre contenant un colorant, des microparticules de résine et un polymère, dans laquelle le polymère comporte une chaîne principale hydrophile et une pluralité de chaînes latérales et dans laquelle le polymère est capable de subir une réticulation entre les chaînes latérales par irradiation au moyen d'un rayonnement actinique ;

les microparticules de résine ont un point de transition vitreuse (Tg) compris entre -30 et 150°C ; et
les microparticules de résine ont un diamètre moyen de particule de 10 à 200 nm.

2. Encre pour jet d'encre selon la revendication 1, dans laquelle la teneur en microparticules de résine est comprise entre 5 et 200% en poids par rapport au poids du colorant dans l'encre pour jet d'encre.

3. Encre pour jet d'encre selon la revendication 1 ou la revendication 2, dans laquelle les microparticules de résine

sont constituées de polyuréthane.

**4.** Encre pour jet d'encre selon l'une quelconque des revendications 1 à 3, dans laquelle la chaîne principale hydrophile du polymère est un acétate polyvinylique saponifié ayant un taux de saponification de 77 à 99% et le polymère a un degré de 200 à 4000.

**5.** Encre pour jet d'encre selon l'une quelconque des revendications 1 à 4, dans laquelle le polymère a un rapport de modification de la chaîne latérale à la chaîne hydrophile principale de 0,8 à 4% en moles.

**6.** Encre pour jet d'encre selon l'une quelconque des revendications 1 à 5 comprenant en outre un initiateur de photopolymérisation soluble dans l'eau.

**7.** Jeu d'encres pour jet d'encre comprenant deux ou plusieurs encres pour jet d'encre, dans lequel au moins l'une des encres pour jet d'encre est l'encre pour jet d'encre selon l'une quelconque des revendications 1 à 6.

**8.** Procédé de formation d'une image par jet d'encre comprenant les étapes suivantes :

éjecter des gouttelettes de l'encre pour jet d'encre selon l'une quelconque des revendications 1 à 6 au moyen d'une tête d'impression à jet d'encre sur un matériau d'enregistrement ;
irradier les gouttelettes éjectées sur le matériau d'enregistrement au moyen de rayonnement ultraviolet ; et
sécher les gouttelettes irradiées sur le matériau d'enregistrement.

**9.** Procédé de formation d'une image par jet d'encre comprenant les étapes suivantes :

éjecter des gouttelettes du jeu d'encres pour jet d'encre de la revendication 7 au moyen d'une tête d'impression à jet d'encre sur un matériau d'enregistrement ;
irradier les gouttelettes éjectées sur le matériau d'enregistrement au moyen de rayonnement ultraviolet ; et
sécher les gouttelettes irradiées sur le matériau d'enregistrement.

**10.** Procédé de formation d'une image par jet d'encre selon la revendication 8 ou la revendication 9, dans lequel le matériau d'enregistrement est un support faiblement absorbant ou un support non absorbant.

**11.** Procédé de formation d'une image par jet d'encre selon la revendication 8 ou la revendication 9, dans lequel le matériau d'enregistrement est un papier brut.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005070714 A
- JP 2005245731 A
- JP 9165541 A
- US 4228438 A
- JP 5064667 A
- JP 2002080767 A
- JP 2002275404 A
- JP 2001081365 A
- JP 60129742 A
- JP 56067309 A
- JP 2000181062 A
- JP 2004189841 A
- JP 20004161942 A
- JP 60132767 A
- US 6145979 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A


### Non-patent literature cited in the description


- SUPERFLEX. Dia-ichi Kogyo Seiyaku Co., ltd,
- PERMARINE. Sanyo Chemical Industries, Ltd,
- Saishin Kamikako Binran. Tech Times
- Insatsu Kogaku Binran (Printing Engineering Handbook